# EUROPEAN PATENT APPLICATION

(11) **EP 1 304 693 A2**
(43) Date of publication of application: **23.04.2003**
(21) Application number: 02380212.7
(22) Date of filing: 15.10.2002
(51) Int. Cl.: G11B 20/00

(54) **CD-audio recording procedure to prevent coping thereof**

(30) Priority: 16.10.2001 ES 200102284
(71) Applicant: Sonopress Ibermemory S.A,., 28820 Coslada (ES)
(72) Inventor: Alocen Martinez, Jose Juan, E-28030 Madrid (ES); Chinnaro Jimenez, Angel, E-28806 Alcalá de Henares (ES)
(74) Representative: Ungria Lopez, Javier

(57) **Abstract**

It comprises recording consecutive tracks in which track 0 is an index containing information on the position occupied by the rest of the tracks, in which the unit of recorded information is determined by a sector (1) each of which is followed by a symbol (2) composed of a matrix of eight P-W channels containing information referring to the location of the sector (1) being reproduced; it is characterised in that the logic level of at least one bit of a group of bits of the P or Q channel is modified in at least one symbol of the tracks 1-n, in which each group is composed of sets of eight consecutive bits belonging to the same channel. The modification provides correct reading by an audio reader but not by a CD-ROM reader nor by an autonomous duplicator, thereby preventing copying of the CD-Audio.

## Description

### OBJECT OF THE INVENTION

The invention comprises a procedure for carrying out recording of a CD-Audio which, as stated in the title of this description, has the purpose of preventing later copying of the CD-Audio.

The procedure of the invention is applicable to any kind of CD that includes audio. The invention is therefore applicable to CD-Audios as well as to those CDs in which audio tracks co-exist with data tracks executable solely in a computer containing a CD-ROM, as in the case of the formats CD-Extra and CD-Mixed. The invention is therefore also applicable to audio tracks co-existing with data for computer, though not to the data track or tracks included in the CD-ROM.

### BACKGROUND OF THE INVENTION

In a CD-Audio the information is physically recorded in the form of pits which are incisions determining differences of relief in the surface of the disc, so that CD readers contain a laser that is focused on the surface of the disc, this surface producing a reflection of the laser in such a manner that the radiation can be detected by a laser photodetector. So, when the laser falls on a pit, no reflection is produced on the photodetector, and in this way the information in the disc can be translated by the reader. The pits have eight different lengths in order to construct a complete code capable of representing the data at an adequate resolution.

From the point of view of logic, the information is organised sequentially, so that the reading is always done from the beginning of the sequence up to the end of it, and therefore no interruptions take place in the reading.

In order to be able to gain access in a simple way to the data at an intermediate point, a plurality of consecutive tracks is recorded in which track zero comprises an index (lead-in) containing information on the position occupied by the rest of the tracks, which are known as the program area of the CD and contain data and/or audio. Moreover, the unit of information recorded in each track is determined by a sector, each of which is followed by a symbol composed of a matrix of eight P-W channels which, among other data, contain information referring to the location of the sector being reproduced.

Each channel has a defined functionality, as explained in the section on the preferred embodiment.

The set of different symbols is known as a subcode.

By means of this configuration, access to the tracks is facilitated without the need to sequentially reproduce the entire volume of information from the beginning, and the audio reproducers generally permit direct access to the reproduction of the CD starting from a track, whose logic starting address differs from the start of the disc.

Furthermore, the proliferation and the fall in price of recorders, recording programs and recordable mediums have led to a spread in the production of illegal copies among users, so that copies not authorised by the owners of the contents of a CD, are obtained that are with the consequent economic loss that this represents for the author and for the record industry.

In order to make a copy, this is generally done by means of direct reading from the start to the end of all the sectors the disc comprises, followed by exact recording on a recordable disc.

Moreover, it is becoming increasingly common to digitally compress the sound contents of a CD and send them down the internet without the authorisation of the owner of said contents, which also implies a serious loss to the industry and to the owner of the contents.

The overwhelming majority of CD-Audio copies are made by means of computer equipment, so that the reader of the computer reads the information contained in each of the readers, then recording it on a recordable medium, being the used recording software used in charge of automatically generating each of the subcode symbols corresponding to each of the sectors of the final disc.

Another of the more common methods is that of autonomous duplicators. This type of device comprises a reader unit and a recorder unit for CD, so that the disc to be copied is introduced into the reader unit and this performs a recording onto a blank disc provided in the recorder unit, in such a manner that the replica is exactly equal to the original.

### DESCRIPTION OF THE INVENTION

In order to overcome the drawbacks earlier stated, the invention has developed a new procedure for CD-Audio recording in order to prevent copying.

It is experimentally proved that if the subcode, and therefore the symbols it comprises, in a CD-Audio presents a very high rate of errors, it becomes impossible to reproduce the disc in any reader. It can equally be proved that if the same error, which affects a particular field of a symbol, is repeated indefinitely in successive symbols, the disc likewise becomes illegible and therefore cannot be copied.

The behaviour of audio readers (audio readers being understood as those which do not require a computer in order to function as a sound reproducer) is different from that of CD-ROM readers with regard to the response to errors in the subcode. So, what happens is that in certain combinations of errors present in the subcode the disc becomes illegible in many CD-ROM reader units, while the same disc is perfectly reproducible in audio readers.

This circumstance is of vital importance since the fact of being able to prevent conventional reproduction of a CD-Audio disc in CD-ROM readers implies the impossibility of copying the disc or of compressing the sound for being sent down the internet, since the reading of the original disc by means of computer is one of the methodologies most used for obtaining copies nowadays, as it has been mentioned in the previous section.

Similarly, the mechanism incorporated into the readers of autonomous duplicators responds in the same way as CD-ROM readers to errors in their code, so that copying sound contents by means of autonomous duplicators is also prevented.

In order to achieve these objectives, the recording procedure of the invention is characterised in that the logic level of at least one bit of a group of bits of the P or Q channel is modified in at least one symbol of the program area (track 1 - track n), in which each group is composed of sets of eight consecutive bits belonging to the same channel.

In one embodiment of the invention just the logic level of a group of the subcode is modified for each symbol of the P or Q channel, with the particular feature that the modification made does not take place in the logic level of the same group corresponding to two consecutive levels.

In one embodiment of the invention, the modification of at least one bit of a group in the P channel comprises changing "0" for "1" in the case of protection of a section of sound, and "1" for "0" in the case of protection of a pause.

Moreover, in the case of protection of a pause it is not possible to have two consecutive "0"s located within one group; and in the case of sound protection two consecutive "1"s may not be located within one group since the presence of consecutive "1"s in the P channel could cause many CD-Audio readers to interpret the start of a pause in the protected point.

In the P channel, more than one bit can be changed always provided it does not affect two consecutive bits.

As far as the Q channel is concerned, it must be previously stated that this includes a control group formed from a CONTROL field and another field conventionally known as ADR. So, in the case in which no modifications have been introduced into the P channel, they can then be introduced into the Q channel which, according to one embodiment of the invention, comprises different values being set in successive symbols in said control group of the Q channel.

In another embodiment of the invention, the same values are set in successive symbols in the Q channel.

In either of the two cases of the modification made in the Q channel, in other, words different values being set in successive symbols in the control group or the same values being set in successive symbols, another group of this same channel is modified in the same symbol in combination with either of these two modifications.

In a preferred embodiment of the invention the ADR field is modified according to the value "0001" since this combination indicates that the data included in the Q channel represents information on the exact point of reproduction and the number of the reproduced track, so that by setting this value in the ADR field and modifying the data of the Q channel a modification is made to the data referring to the reproduction time.

In one embodiment of the invention, the CONTROL field is modified according to the value "X0XX", with X being "0" or "1" in order to represent audio information, since whenever the second bit of the CONTROL field is a "0" this indicates that the information is audio and therefore this modification does not affect the audio reproduction.

In a preferred embodiment of the invention, when carrying out the modification of a group in the Q channel the groups corresponding to the CRC (Cyclic Redundancy Code) of that channel are not modified.

In combination with the modification of the P channel or the Q channel of all the embodiments described, the data of the R-W channels can be modified in one or several symbols.

In these R-W channels the same modifications are made in two successive symbols or different modifications are made in two successive symbols.

In this way, with the modifications carried out, the recorded CD-Audio can be read by an audio reader but it cannot, on the other hand, be read by a CD-ROM reader nor by an autonomous duplicator, thereby preventing its copying.

In order to facilitate a better understanding of this description, and forming an integral part of it, a series of figures representing the object of the invention have been included in an illustrative and not restrictive manner.

### BRIEF DESCRIPTION OF THE FIGURES

Figure 1 shows a schematic representation of the position occupied by the symbols with respect to the sectors preceding them.
Figure 2 shows a schematic representation of the matrix constituting each of the symbols in which the columns constitute the P-W channels and the rows the different bytes making it up.
Figure 3 shows a schematic representation of the structure of the Q channel.
Figure 4 shows a schematic view of the structure of the data field included in the Q channel.

### DESCRIPTION OF A PREFERRED EMBODIMENT

Given below is a description of the invention based on the figures commented on above.

As was described in the section on antecedents of the invention, sector 1 of a CD-Audio constitutes the minimum unit of access information which has a size of 2352 bytes equivalent to 1/75 second of sound information.

Apart from the sound information, the sector comprises a compressed copy of said sound information in order to permit its retrieval in the event that part of the sound information is illegible or does not accord with the summarised information, so that the absent data or errors in the sound information are replaced without the CD user perceiving any error in the listening at all.

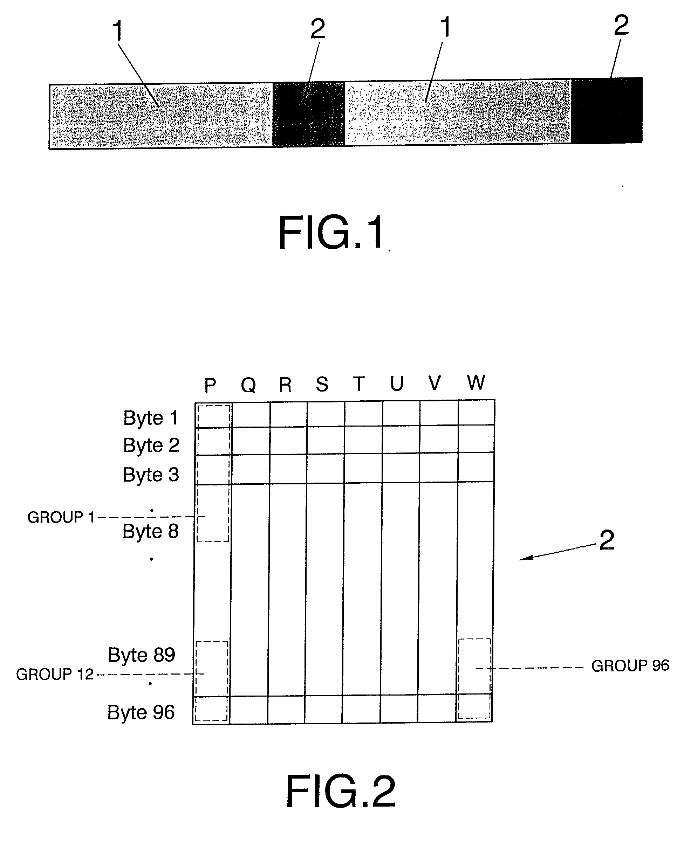

Following each sector there is a symbol 2 (figure 1) so that the set of all the symbols constitutes a subcode.

The size of each symbol is 96 bytes per sector, and these are arranged as eight information channels which receive the name P-W.

Figure 2 shows the way in which each channel is assigned within a subcode symbol. In this figure, it can be seen that for each byte of information, there is one bit that corresponds to each channel, so that each symbol is constituted by a matrix of 96 x 8 bits.

Therefore, the subcode will consist of the information contained in each of the matrices of the symbols.

Given below is a general description of the meaning conventionally given to the channels constituting the columns of the symbol, with the purpose of facilitating a better understanding of the procedure of the invention.

The P channel contains information relating to the location of track changes (the concept of track was explained in the section on antecedents of the invention) provided by the index situated at the start of a CD (track 0). When a track ends the P channel sets its value with bits equal to "1" for at least two seconds, so that the bits of all the symbols during that interval of time have their P channel set to "1". This means that during the rest of the time in which no change of track is provided for, the information in the P channel will be equal to "0".

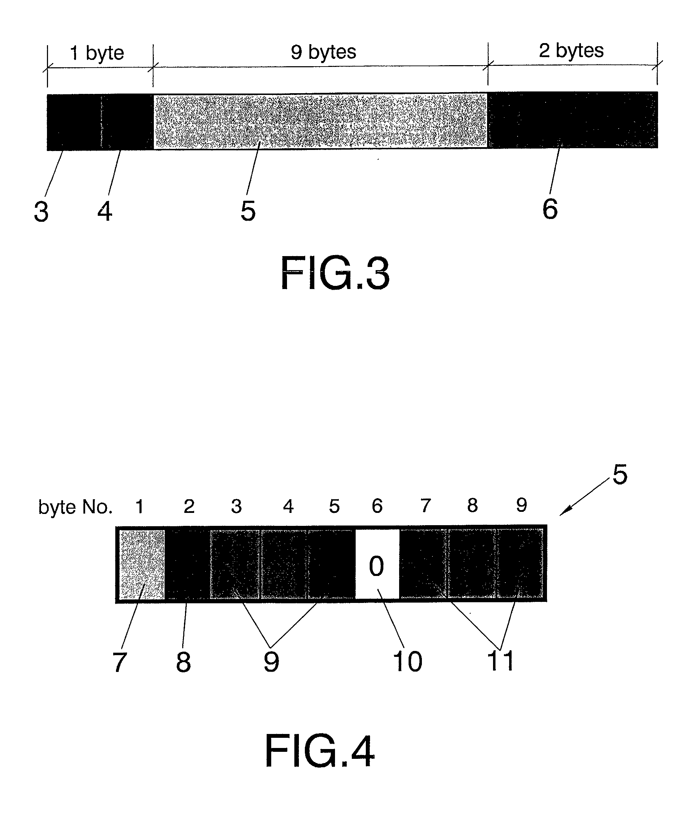

The structure of the Q channel is represented in figure 3, and it comprises four different fields:
1) A CONTROL field 3 composed of four bits located at the start of the subchannel, said bits providing information on the nature of the information contained in sector 1. For CD-Audio, the modes of this field that are most used are the following:
   - 0000 to indicate audio in two channels without pre-emphasis and that copying is prohibited.
   - 0010 to indicate audio in two channels without pre-emphasis and that copying is permitted.
2) A second ADR field 4 which has three possible values, with each of these values representing the nature of the information contained in the channel data, which corresponds to the following field, as described below.
   - ADR = 0001, represents mode 1 and indicates that the data in the following field represent information on the exact point of reproduction and the number of tracks reproduced.
   - ADR = 0010, represents mode 2 which indicates that the Q data represents information relating to the UPC-EAN code, which is a code sometimes used in CD-Audio for identifying the volume and assigning it to a reference. This number is widely used by the record industry for identifying the record company, year of publication, etc.
   - ADR = 0011, represents mode 3, which indicates that the Q data represent information relating to the ISRC code (International Standard Recording Code), which is a code sometimes used in CD-Audio for identifying each of the tracks and assigning them to a reference. These numbers are widely used by the record industry for identifying each musical theme, record company, year of publication, etc.
3) The following field (5) refers to the Q data and occupies 9 bytes in which one or another kind of information is represented, depending on the stated by the ADR field, as commented on above. For the invention it is merely necessary to describe when ADR is equal to 0001, in other words when it refers to mode 1, in which case the structure of the Q data field is as represented in figure 4 and contains the following bytes:
   The reference number 7 indicates the TNO value which defines the track number. Its value is 00 for the index (track 0 where the tracks index is recorded) and AA for the exit index or band located after the last track (track n) which indicates the end of the disc.
   The numerical reference 8 indicates the second byte known as X and refers to the track subindex. When a track has no subindex, in other words separations of a track permitting a specific part of a song to be located within a track, the TNO value is 01. For pauses, this value is 00.
   The numerical reference 9 is composed of the bytes 3, 4 and 5, and indicates the position within the area of the program measured in units of reproduction time that corresponds to the sector adjoining this symbol, stated in minutes, seconds and sectors.
   The numerical reference 10 indicates the sixth byte and this must always be set to 0 by definition.
   The numerical reference 11 refers to bytes 7, 8 and 9, which indicate the position within the disc measured in units of reproduction time corresponding to the sector adjoining this symbol, stated in minutes, seconds and sectors. There generally exists a difference of two minutes between the time represented by the reference 9 and this one.
4) The last field has been referenced with 6 and constitutes the CRC (Cyclic Redundancy Code) of Q and it comprises two bytes in which the summarised information permitting retrieval of the data from the Q channel when there are differences between what is stated by the data field 5 and the CRC field 6 is stored.

If fields 5 and 6 are damaged at the same time, the information in the subchannel will be irretrievable since there would be no possibility of finding a way of replacing the data. In no case therefore can the data in fields 5 and 6 be modified at the same time since in this case the information would not be able to be retrieved.

With regard to the R-W channels, it can be pointed out that these are generally used for transporting text information relating to the track being reproduced, title of the theme, etc. This information is represented in some audio readers, such as for example in the CD formats known as CD-TEXT.

The ninety-six sets of six bits represented in each symbol by these R-W channels are divided into groupings of twenty-four in which the text information and the A and B parity are represented. The summarised information permitting retrieval of the data on the position of each three is represented in parity block A. The summarised information permitting retrieval of the data of position zero to twenty-three is represented in parity block B. The retrieval of data by parity indicates that if the number of some logics is even the parity information will be presented as "0" while if it is odd it is a "1".

So far, the basic concepts conventionally used in CD-Audios have been explained. Below, there follows a description of the procedure of the invention.

As it has been earlier stated, if certain errors are introduced into a CD-Audio, it may occur that the CD-Audio be legible by an audio reader but not by a CD-ROM reader nor by an autonomous duplicator, thereby achieving the desired effect so that copying the CD-ROM is prevented, as commented above.

To achieve this, the procedure of the invention comprises modifying the logic level of at least one bit of a group of bits of the P or Q channel in at least one symbol of the subcode of the program area (track 1 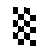 track n) in which each group comprises sets of eight consecutive bits belong to the same channel. Each channel therefore comprises twelve groups.

The first eight bits of the P channel are known as group 1 and so on successively to 12, so that the first eight bits of the Q channel belong to group 13 and the last eight bits of the W channel correspond to group 96.

The procedure of the invention provides that the modifications constituting errors can be made in all the bits of a group apart from in the restrictions to be described further below.

The procedure of the invention provides that the modifications must solely and exclusively be made on tracks 1 to n and never on track 0, in other words the tracks index must not be modified, nor must the data sectors be modified.

In the event that the modification is made on the P channel, the following rules must be obeyed:
- The logic level of just one group will be modified for each symbol. In other words, a symbol must not have two groups with modified levels, since if this was done, the percentage of errors would make to detect an end of track where in fact there is not any, which could cause problems for being read by means of an audio reader.
- The same modification must not be made in the logic level of the same group number in two consecutive symbols, since repetition in two consecutive symbols could imply a non-existent end of track for audio readers, which means that if in a particular symbol group 2 was modified by including the value 00100010, the group in the following symbol will not be able to undergo the same modification so that it can be read by an audio reader.
- In each modified group a minimum of one bit has to be modified, going from "0" to "1" in the case of protection of a section of sound, and from "1" to "0" for the case of protecting a pause.
- In the case of protecting a pause, two consecutive "0"s will not be located within a group, and in the case of sound protection, two consecutive "1"s will not be located within a group.

For example, the following combinations will be valid for sound protection:
"10100001" or "10001001" or "10000001".

For protection of a pause, the following combinations will be valid:
"01110111" or "11101101" or "01111110".

The presence of consecutive "1" values in the P channel could cause many audio readers to interpret the start of a pause in the protected point.
- As it has been earlier stated, the P and Q will not be modified simultaneously since the accumulation of errors in these channels generates a loss of control over the reproduction in many audio readers.

If the errors or modifications are introduced in the Q channel, the following conditions have to be met:
- Only the logic level of one group is modified for each symbol. In other words, a symbol must not have two groups with modified levels, since if this occurs an end of track would be detected where one does not in fact exist. This rule has an exception in group 13, corresponding to the CONTROL field and ADR field 4, which will be able to be set to certain values different from the original in successive symbols and in combination with other modifications of the Q channel.

The ADR field 4 will preferably display the value 0001 which, in combination with other modifications of the Q channel, will offer an alteration of the reproduction time data (minutes, seconds, sectors) referenced with 9 and 11, which will cause many CD-ROM readers to lose control of the reproduction. Also, the control field 3 will display the values X0XX, where X can be "0" or "1", so that the information will be represented as audio.
- The same modification must not be made in the logic level of the same group number in two consecutive symbols, since repetition of the same error in two consecutive symbols could imply a non-existent end of track for audio readers. Evidently, there also exists an exception to this rule as stated above, which affects fields 3 and 4.
- In each modified group, a minimum of one bit will be modified.

In a preferred embodiment, groups 23 and 24 corresponding to CRC 6 of the Q channel are not modified, since modification of these groups means that, when the Q channel displays errors outside this system, for example physical defects affecting the Q data bits or optical problems in reading, the reconstruction of the Q channel becomes impossible, so that the disc is illegible for all types of reader.

With respect to the R and W channels, it can be pointed out that these can be modified within a single symbol, in various groups at the same time, in combination with the modification made in the P or Q channels described above.

Moreover, the same modifications will be able to be repeated in two consecutive symbols in these channels.

## Claims

1. A CD-Audio recording procedure to prevent copying thereof,
which comprises recording a plurality of consecutive tracks in which track 0 contains an index (Lead-In) with information on positions occupied by tracks comprised in a Program Area of the CD (Data and/or Audio);
in which a unit of recorded information is determined by a sector (1), recording subsequently to said sector (1) a symbol (2) comprising a matrix of eight P-W channels which contains at least information referring to a location of the sector being reproduced, each channel determining a column of the matrix and the information contained in a set of matrices determining a subcode;
said procedure being **characterised in that**
a logic level of at least one bit of a group of bits of a channel selected from P and Q channel is modified in at least one symbol (2) of the subcode of the program area (track 1 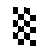 track n), each group comprising sets of eight consecutive bits belonging to a same channel.

2. A CD-audio recording procedure to prevent copying thereof, according to claim 1, **characterised in that** only the logic level of one group of the subcode is modified for each symbol (2).

3. A CD-audio recording procedure to prevent copying thereof, according to claim 2, **characterised in that** the logic level of homologous groups located in consecutive symbols is not modified.

4. A CD-audio recording procedure to prevent copying thereof, according to claim 3, **characterised in that** the modification of at least one bit of a group of the P channel comprises changing
a "0" for a "1" when a sound section is protected, and
a "1" for a "0" when a pause is protected.

5. A CD-audio recording procedure to prevent copying thereof, according to claim 4, **characterised in that**
when a pause is protected, a plurality of "0" are located in non-consecutive positions within a group;
when a sound section is protected, a plurality of "1" are located in non-consecutive positions within a group.

6. A CD-audio recording procedure to prevent copying thereof, according to claim 4, **characterised in that** at least two bits occupying non-consecutive positions are changed.

7. A CD-audio recording procedure to prevent copying thereof, according to claim 3, in which the Q channel includes a control group comprising a CONTROL field (3) and an ADR field (4), **characterised in that** in said control group of the Q channel different values are set in successive symbols.

8. A CD-audio recording procedure to prevent copying thereof, according to claim 3, in which the Q channel includes a control group comprising a CONTROL field (3) and an ADR field (4), **characterised in that** in said control group of the Q channel, same values are set in successive symbols.

9. A CD-audio recording procedure to prevent copying thereof, according to any of claims 7-8, **characterised in that** in combination with the modification of the control group of the Q channel, another group in said channel is modified in said symbols.

10. A CD-audio recording procedure to prevent copying thereof, according to claim 9, **characterised in that** the ADR field (4) is modified according to a value "0001" so as to, in combination with modifications of the Q channel, data on a reproduction time be modified.

11. A CD-audio recording procedure to prevent copying thereof, according to claim 7, **characterised in that** the CONTROL field (3) is modified according to a value "X0XX", X being a value selected from "0" and "1", for representing audio information.

12. A CD-audio recording procedure to prevent copying thereof, according to claim 1, **characterised in that** when modifying a group of the Q channel, the groups corresponding to a CRC (6) (Cyclic Redundancy Code) of said channel are not modified.

13. A CD-audio recording procedure to prevent copying thereof, according to any of the preceding claims, **characterised in that** data of the R-W channels are modified in at least one symbol.

14. A CD-audio recording procedure to prevent copying thereof, according to claim 13, **characterised in that** the same modifications are made in two consecutive symbols in data of the R-W channels.

15. A CD-audio recording procedure to prevent copying thereof, according to claim 13, **characterised in that** different modifications are made in two consecutive symbols in data of the R-W channels.
